# EUROPEAN PATENT SPECIFICATION

(11) **EP 1 040 745 B1**
(45) Date of publication and mention of the grant of the patent: **17.09.2003**
(21) Application number: 00202440.4
(22) Date of filing: 06.03.1995
(51) Int. Cl.: A01D 43/08, A01F 29/20

(54) **Crop discharge control means for a forage harvester**
Entladungsmittelkontrolle für Feldhäcksler
Moyens de contrôle de décharge pour faucheuse-hacheuse

(30) Priority: 16.03.1994 GB 9405097
(43) Date of publication of application: 04.10.2000
(62) Divisional of application: 95200537.9
(73) Proprietor: CNH Belgium N.V., 8210 Zedelgem (BE)
(72) Inventor: Naaktgeboren, Adrianus, 8490 Varsenare (BE)
(74) Representative: Vandenbroucke, Alberic

(56) References cited:
- EP-A- 0 492 195
- DE-A- 3 224 269
- FR-A- 2 328 385
- US-A- 4 300 726
- US-A- 4 529 348
- "ELECTRIC REMOTE CONTROL SYSTEM FOR FORAGE HARVESTERS" AGRICULTURAL ENGINEERING, vol. 52, no. 2, February 1971 (1971-02), XP002144805

## Description

The present invention relates generally to forage harvesters according to the preamble of claim 1, which have means for the comminution of crop material and discharge means, comprising blower means and duct means, operable to propel said crop material out of the forage harvester and to direct the same into a collecting vehicle. More particularly, the invention relates to a control system for the positioning of the duct means.

Generally, forage harvesters chop crop material, such as grass or maize, into small particles for storage and subsequent feeding to livestock. Conventional harvesters comprise a rotating cutterhead with a plurality of knives, which cooperates with a stationary shear bar to cut the crop material fed thereto into small particles and deliver it to discharge means.

The comminuted crop material is normally conveyed to the inlet of a blower housing, in which paddles of a blower rotor impart sufficient energy thereto for upward ejection through a blower outlet into a curved discharge spout, which directs the flow of crop material sidewardly or rearwardly into a collecting vehicle.

The mass of the spout may effect inertia forces upon the harvester, which can deform the blower housing.

It is an object of the present invention to enhance the operation of prior art harvesters by reducing the risks of deformation of the housing following from the rotation of the spout.

According to the invention, a forage harvester is provided, comprising:
- a main frame;
- a cutterhead assembly, comprising a cutterhead, operable to comminute crop material;
- blower means, disposed to receive the comminuted crop material from said cutterhead assembly, and operable to propel said crop material to a blower outlet;
- duct means, comprising a lower member in register with the blower outlet, and an upper member, mounted onto said lower member and being operable to guide the flow of comminuted crop material along a curved path for discharging the crop material from the forage harvester,
- rotation means operable to rotate the upper duct member and the lower duct member with respect to the main frame; and
- a rotation control system, operatively linked to said rotation means for controlling the rotation of said upper and lower duct members,
characterized in that said rotation control system is operable to rotate said duct members at a variable rotational speed.

Inertia forces on the harvester can be confined by gradually increasing or decreasing the rotation speed of the duct means upon a beginning, respectively a cessation of a rotation command by a handle or push button.

To the rear of the upper duct member there may be mounted a pivotable deflector, whereof the vertical movement is controlled by an electrical motor. The deflector may be pivoted at a low and at a high speed, as commanded by the same handle or push button which commands the rotation of the duct means.

The lower member may be rotated by a worm and gear assembly, in which a shear bolt can be ruptured in case an excessive external load would be experienced on the upper duct member, thus permitting the duct members to give way, whenever necessary.

A forage harvester in accordance with the present invention will now be described in greater detail, by way of example, with reference to the following drawings, in which:
Figure 1 is a side elevational view of a forage harvester, comprising a front unit, a blower module and duct means;
Figure 2 is an enlarged cross sectional view of the blower means and the lower portion of the duct means of Figure 1, after removal of the front unit;
Figure 3 shows a rear elevational view of the blower module, taken in the direction of arrow III in Figure 2;
Figure 4 is a top view of the lower portion of the duct means, taken in the direction of arrow IV in Figure 2;
Figure 5 is a top view of the forage harvester, shown in Figure 1, illustrating the middle and, in phantom, the leftmost and rightmost positions of the duct means;
Figure 6 is a side view of the rear portion of the duct means of Figure 1, showing in full lines a pivotable deflector in its top position and, in phantom, in its lowest position;
Figure 7 is a schematic representation of a control system for the rotation of the duct means and the pivotment of the deflector; and
Figure 8 is a graph of the response of the control system of Figure 7 to a change in the duct rotation command.

The terms "front", "rear", "forward", "rearward", "right" and "left" used throughout this specification are determined with respect to the normal direction of movement of the machine in operation and are not to be construed as limiting terms.

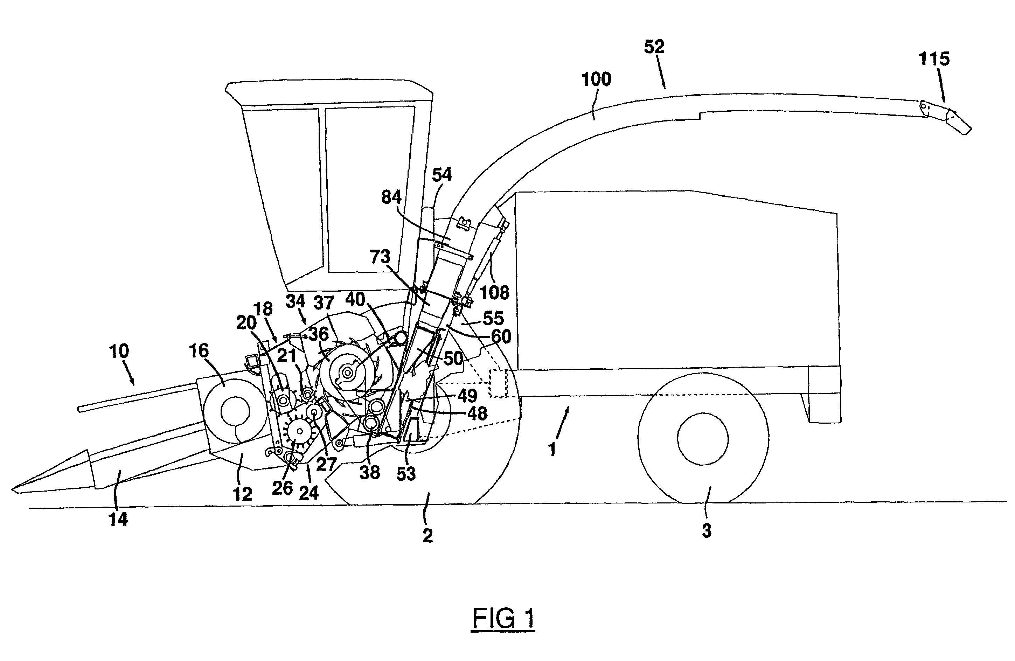

With reference to the drawings and more particularly to Figure 1, there is shown a forage harvester having a main frame 1 on which there are mounted ground engaging traction wheels 2 and steering wheels 3. The forage harvester is shown equipped with a crop collecting apparatus, in the form of a row crop attachment 10, suitable for the harvesting of maize, but which can be replaced with a conventional windrow pick-up device or a conventional cutter bar attachment, depending on the type of crop to be harvested. Customarily, the row crop attachment 10 comprises an attachment frame 12, which supports a plurality of row crop units 14, operable to harvest maize stalks from the field and to convey the same rearwardly to an auger 16, which in turn delivers the crop material to the bite of feeder means installed in a front unit of the forage harvester.

Said feeder means comprise lower feeder means, including a forward lower feedroll 26, and a smooth, rear lower feedroll 27, and upper feeder means, including an upper forward feedroll 20 and an upper rear feedroll 21. The lower feedrolls 26, 27 are rotatably mounted in a lower feeder frame 24 and the upper feedrolls 20, 21 are mounted in an upper feeder frame 18, to which the row crop attachment 10 is attached. Said upper and lower feeder means rotate to convey the crop material inbetween to a cutterhead 36, which is mounted within a cutterhead frame 34 and comprises a plurality of knives 37, generating a cylindrical peripheral shape or profile, when the cutterhead 36 is rotated.

The knives 37 cooperate with a fixed shearbar to cut the crop material to length and to project it to a pair of counter-rotating compressor rolls 38, which crack the kernels which are left in the chopped material and deliver the whole to discharge means, operable to engage the processed crop material and to direct it as required, usually into a collecting vehicle, which is moving alongside or behind the forage harvester.

The assembly of the cutterhead frame 34, the upper feeder frame 18 and the lower feeder frame 24 is attached to the main frame 1 by means of a cutterhead support 40, which is removably mounted to vertical beams 54 of the main frame 1.

Said discharge means include a blower module, comprising a backward leaning blower housing 48 and a rotor 49, rotatably mounted therein and to which a plurality of paddles 50 is attached for throwing the crop material upwardly and rearwardly through the blower outlet 73. The discharge means further include duct means 52, which comprise a lower member, constituted by a straight discharge tube 84, being in alignment and in register with the blower outlet 73, and an upper member, constituted by a curved discharge spout 100, which is mounted onto said tube 84 and carries at its rear end a deflector 115.

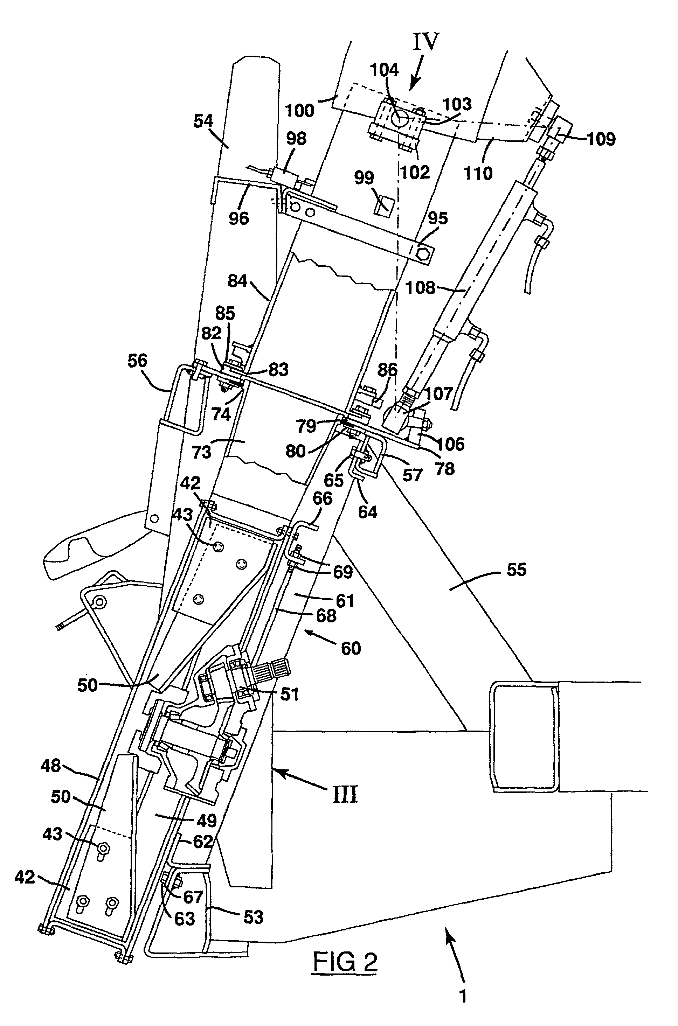

As shown in Figure 2, the main frame 1 comprises at its front end a cross frame member 53 and two vertical beams 54, to which a pair of struts 55 is welded. A cross frame member 56 is welded above the blower housing 48 to the beams 54. Another cross frame member 57 is welded behind the blower housing 48 to the struts 55.

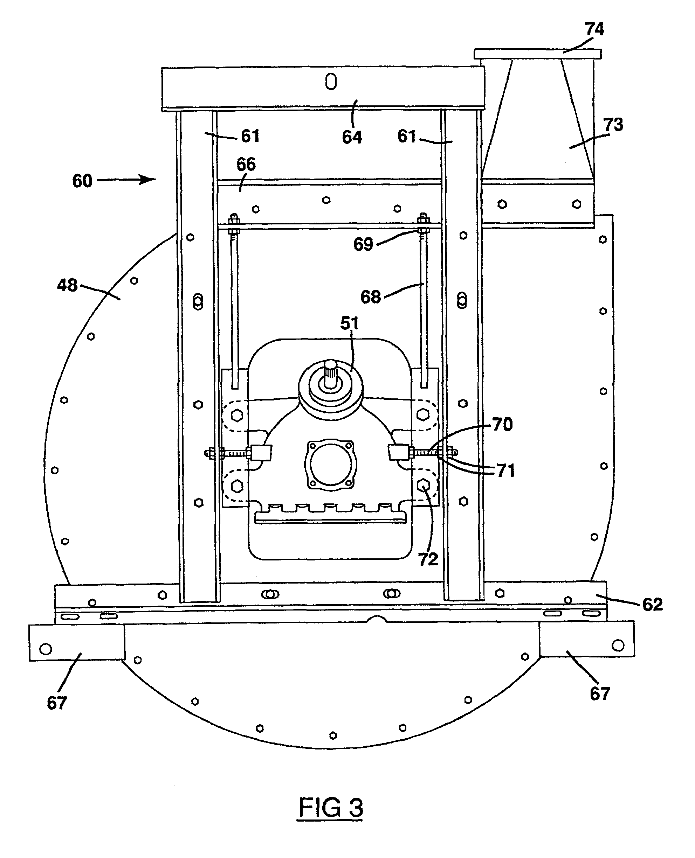

As can be seen in Figures 2 and 3, the housing 48 is mounted onto a blower support frame 60, which comprises a lower member 62 with an L-shaped section, resting on the cross frame member 53. Two vertical plates 67, welded underneath the outer ends of said lower member 62, extend transversely beyond the housing 48 and each have a hole for receiving a bolt 63 for the connection of the blower frame 60 to the cross frame member 53. The support frame 60 further comprises two inclined frame members 61, which are welded to the lower member 62 and extend above the top of the blower housing 48, and two transverse members 64, 66, whereof the upper member 64 is welded to the top of said inclined members 61 and the lower member 66 is welded inbetween the same. The upper member 64 rests against the rear cross member 57 of the main frame 1 and is attached thereto by a single central bolt 65.

The blower module is affixed to the main frame 1 by means of the three bolts 63 and 65 only and has no further connections to the other components of the harvester. When the front unit has been removed from the harvester frame, as depicted in Figure 2, an operator, standing in the place of the front unit, has direct access to said bolts 63, 65, because none of them is hidden behind the blower housing 48: the three bolts 63, 65 lie outside the projection in for-and-aft direction of said housing 48.

It will be appreciated by the man skilled in the art that the blower frame 60 will not be distorted by its connection to the main frame 1: the three connection points suffice to perfectly define its position. Moreover, it has been experienced that, when four or more connection points of the blower frame 60 to the main frame 1 are used in this type of large constructions, they usually are not perfectly aligned, so that the blower frame 60 and the housing 48 are distorted during their attachment to the main frame 1, unless the alignment is improved by using close tolerances on the dimensions of the components or by applying shims to the connection points. These additional requirements are prevented by limiting the number of connection points to three. A gearbox 51, comprising an input shaft, which is linked to an engine (not shown) of the harvester, and an output shaft, which carries the blower rotor 49, is connected with a pair of inclined pull rods 68 to the transverse member 66. The vertical position of the gearbox 51 is adjusted by rotating the nuts 69, which attach the rods 68 to the transverse member 66. Horizontal studs 70 extend from the sides of the gearbox 51 through the inclined frame members 61 and are attached thereto with nuts 71, which can be rotated for sideways adjustment of said gearbox 51. The blower rotor 49 is centred in the housing 48 by means of the nuts 69 and 71, whereafter the gearbox 51 is secured to the back of the housing 48 with four bolts 72.

Wear plates 42 are attached to the crop-engaging sides of the rotor paddles 50 with plow bolts 43 passing through radial slots in said paddles 50. The plates 42 thus can be radially adjusted in order to minimize the play between the outer edges of the plates 42 and the inside of the blower housing 48. Direct access to the plow bolts 43 is gained after removal of the front unit from the harvester frame 1, and as there is no direct connection between said front unit and the blower housing 48, the latter will not be distorted when the front unit is reinstalled on the harvester frame 1.

The blower outlet 73 has a rim 74, which is received in, but not connected to, a base plate 78, mounted onto the front cross frame member 56 and the rear cross frame member 57. A rubber seal 79 closes the space between the base plate 78 and the rim 74 and is held in place by a ring plate 80.

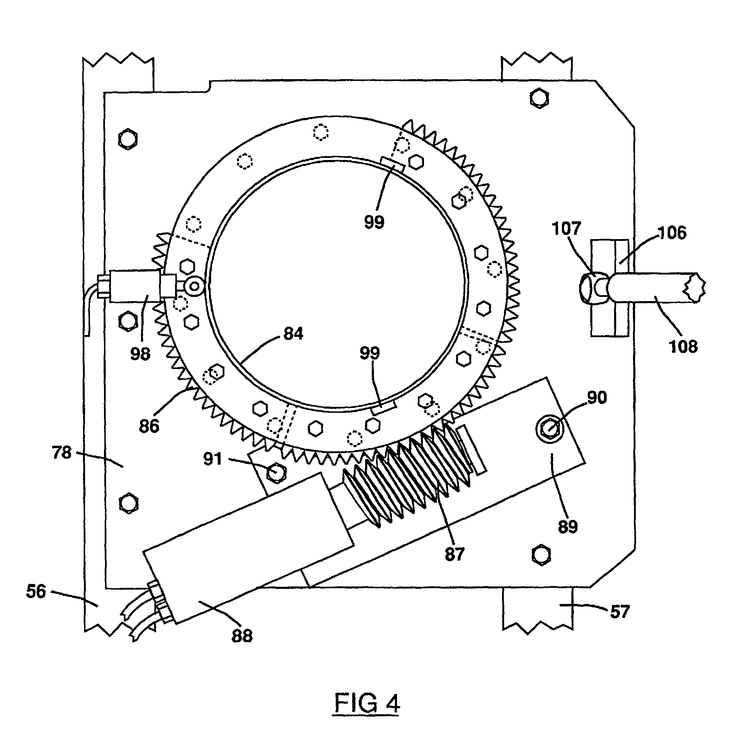

On the upper side of the base plate 78 a base ring 82 is mounted, which supports a collar 83 of the discharge tube 84. Said collar 83 is rotatably secured on the base ring 82 by a clamp ring 85. As shown in Figure 4, a segmented worm gear 86, meshing with a worm 87, is attached to the tube 84. The worm 87 is rotated by a hydraulic motor 88 in order to turn the tube 84 and hence the discharge spout 100. The assembly of the worm 87 and the motor 88 is mounted onto a worm support 89, which in turn is mounted for pivotment about a pivot 90 at the rear end of said support 89. The other end of the support 89 is affixed to the base plate 78 with a shear bolt 91, which is dimensioned to withstand the forces occurring during normal operation of the motor 88, but which will shear off under extraordinary rotational loads on the spout 100. Such loads may occur when, during travel, the spout 100 hits obstacles, such as trees, posts or buildings; the consequent load on the teeth of the gear 86 forces the worm 87 outwardly and breaks the shear bolt 91, enabling the pivotment of the worm support 89 about pivot 90 and the disengagement of the gear teeth. The tube 84 and the spout 100 will then rotate freely, thereby precluding the deformation of said spout 100 and the further transmission of distorting forces on the harvester frame 1 or any other component of the harvester.

The tube 84 leans backwards in alignment with the blower housing 48 and is additionally supported at its middle by a band 95, which is affixed to an upper cross frame member 96, extending above the front cross member 56 between the vertical beams 54. A sensor 98, which contacts the circumference of the tube 84, is mounted onto the upper member 96. Two cams 99 on both sides of the tube 84 actuate the sensor 98, when the worm 87 rotates the duct means 52 to their leftmost or rightmost position.

As shown in Figure 2, the blower housing 48 and the discharge tube 84 are positioned at an angle of about 20 degrees to a vertical line. A pair of supports 102 is welded to the upper portion of the discharge tube 84. They carry a pair of pivot blocks 103, in which two pins 104 are mounted for pivotment of the spout 100 relative to the tube 84. The vertical position of the spout 100 is controlled by a hydraulic cylinder 108, whereof the lower end is assembled to the ring of a ball joint 107 and the upper end to the ring of a ball joint 109. The lower ball joint 107 defines a lower pivot point of the cylinder 108 and is held in vertical alignment with the axis of the pivot pins 104 by a support 106, which is welded to the base plate 78.

The distance between the axis of the tube 84 and the lower pivot point is substantially equal to the diameter of said tube 84 and the tube length between the axis of the pivot pins 104 and the base plate 78 is substantially equal to three times the same diameter.

The upper ball joint 109 defines an upper pivot point of the cylinder 108 and is attached to a support member 110, welded to the rear of the spout 100. When the spout 100 is in its nominal position, as shown in Figure 2, the upper ball joint 109 lies substantially in the same horizontal plane as the pivot pins 104. The angle between the axis of the cylinder 108, passing through the upper ball joint 109 and the lower ball joint 107, and a vertical line is larger than the angle between the centre line of the tube 84 and the same vertical line.

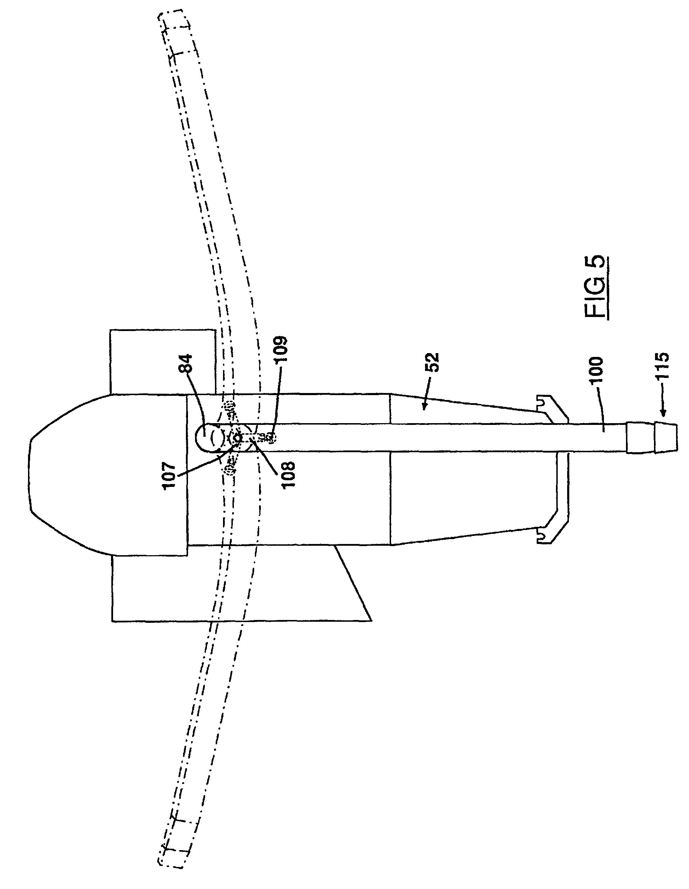

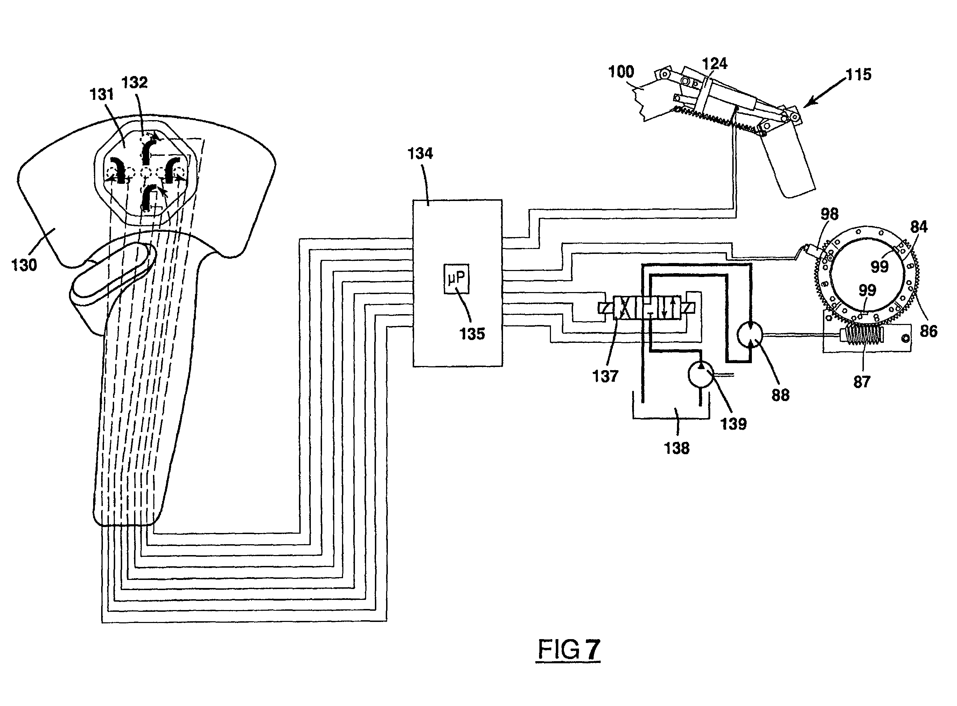

As depicted in Figure 5, this arrangement of the discharge tube 84, the spout 100 and the cylinder 108 permits the rotation of the duct means 52 from its rearward position over 105° to the left and to the right, without interference of the cylinder 108 with the tube 84. Moreover, the large ratio of the tube length to its diameter has an equalizing effect on the crop material flow coming from the blower rotor 49. At the outlet of the tube 84, the flow is more laminar and more evenly spread than in the blower outlet 73. This is particularly advantageous in the transition area between the tube 84 and the spout 100, where build-up of crop material and leakage of crop juice and any injected conserving fluids, such as propionic acid, have to be avoided.

The weight of the spout 100 is supported by the cylinder 108 and the pivot pins 104, which lead the resulting forces to the base plate 78 and the band 95 and therefrom to the main frame 1. No portion of the load is applied upon the blower housing 48 or any other component.

The arrangement of the cylinder 108 between the lower portion of the spout 100 and the base plate 78 enables the use of a cylinder with short stroke, which still permits a large vertical movement of the rear end of the spout.

The placement of the lower ball joint 107 in vertical alignment with the axis of the pivot pins 104 provides a vertical axis of rotation inbetween. Together with said ball joint 107 and said pivot pins 104 the upper ball joint 109 defines a triangle, which is rotated about said vertical axis by the rotation of the tube 84, during which the pins 104 allow for a continuous relative movement between the spout 100 and the tube 84. As the upper ball joint 109, being part of the fixed triangle, is travelled within a horizontal plane, the rear end of the spout 100 is substantially maintained within a horizontal plane. Without the benefit of the vertical alignment of the pins 104 and the lower ball joint 107, the end of the spout 100 would be rotated in an arc out of the horizontal plane.

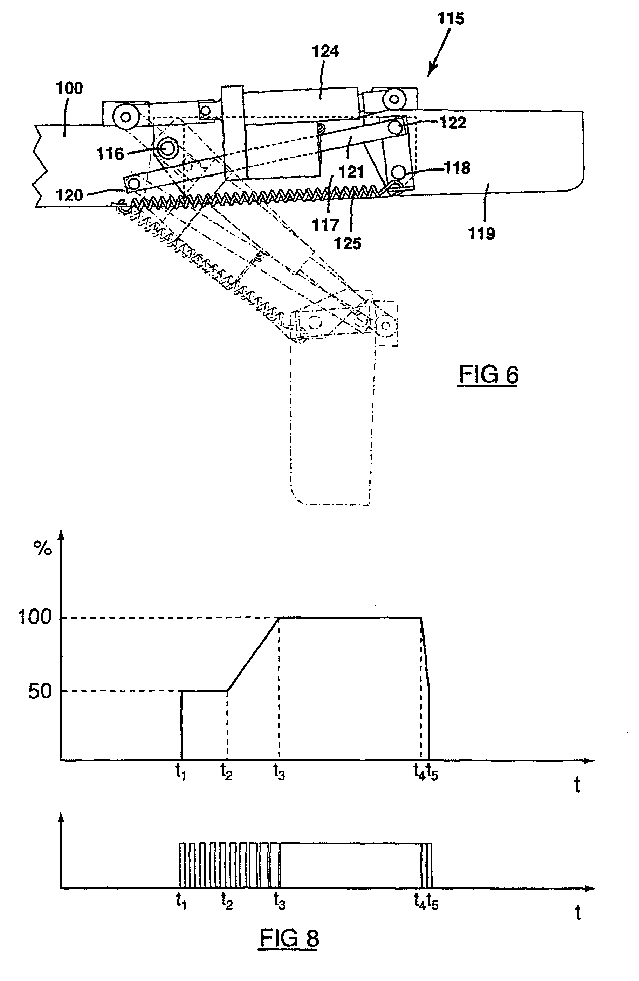

Figure 6 shows in further detail the deflector 115, which comprises a first deflector member 117, attached by a pair of pivot pins 116 to the rear of the spout 100, and a second deflector member 119, attached by a pair of pivot pins 118 to the first member 117. The sides of the spout 100 and of the deflector members 117, 119 are slightly converging, in order to obtain a more concentrated flow of crop material towards the collecting vehicle. The deflector 115 further comprises a pair of slats 121, which extend between a pair of pivot pins 120 at the rear of the spout 100 and another pair of pivot pins 122 above the pins 118. The second member 119 is pivoted relative to the spout 100 by means of an actuator 124, which comprises an electrical motor and a spindle and which links the rear top of the spout 100 to the top of the second member 119. The actuator 124 is placed aside the deflector 115 in order to minimize the total height of the harvester and to reduce the chances of damage by overhanging trees. The pins 116 and 118 define the position of the first deflector member 117 between the spout 100 and the second deflector member 119. The play of the members 117, 119 on the pins 116, 118 allows substantial relative movement of the second member 119 relative to the spout 100. Therefore a spring 125 is mounted between the lower side of the second deflector member 119 and the spout 100. This spring 125 also counters the reaction forces of the crop material flow on the deflector 115 and reduces the corresponding load on the actuator 124.

When the actuator 124 is extended, as shown in phantom in Figure 6, the deflector members 117, 119 are pivoted downwardly, in order to deflect the flow of the crop material into a collecting vehicle, which is travelled alongside or behind the harvester.

As illustrated in Figure 7, the rotation of the spout 100 and the pivotment of the deflector 115 are commanded by means of a multifunctional push button 131, which is mounted onto an operator's handle 130. The handle 130 comprises eight contact points 132, which are arranged in a cross underneath the button 131. A light pressure on one side of the button 131 only energizes a central contact point 132 for the command of a low speed movement of the spout 100 or the deflector 115. A higher pressure on the side of the button 131 will additionally energize an outer contact point for the command of a high speed movement of the spout 100 or the deflector 115. A push to the left or the right will rotate the tube 84 and the spout 100 horizontally and an upward or downward push will pivot the deflector 115 vertically. It is also possible to engender a simultaneous vertical and horizontal movement by applying a pressure on one of the quadrants defined inbetween the contact points 132. This feature enables a quick guidance of the material flow into the collecting vehicle.

The contact points 132 are connected to and scanned by an electrical control unit 134, which includes a programmable microprocessor 135. The hydraulic motor 88 of the worm 87 is hydraulically connected to a conventional directional control valve 137 with four ports and three distinct positions. Pressurized oil from the tank 138 is fed to the entrance port of the valve 137 by a hydraulic pump 139, which is rotated by the harvester engine (not shown). The condition of the valve 137, and hence of the oil flow, is controlled by two electrical coils, which are connected to the electrical control unit 134. A continuous variation of the oil flow can be obtained by choosing a valve of the proportional type, with a fixed ratio between the oil flow and the current through the valve coils, and applying a variable tension or a pulse-width-modulated signal to the valve coils.

The sensor 98, which detects the leftmost or rightmost positions of the duct means 52, is equally connected to and scanned by the electrical control unit 134. The current to the electrical motor of the deflector actuator 124 is also controlled by the unit 134.

The microprocessor 135 steers the electrical output signals to the valve 137 and the actuator 124 in response to the commands given by means of the push button 131 and to the signals from the sensor 98.

The graph in Figure 8 shows the output signal to the valve 137 in relation to variations in the input signals. At a first instant t₁ a low speed rotation command is given by a light pressure on a side of the push button 131, which energizes an inner contact point 123. Over a coil of the valve 137 a tension is provided, which corresponds to 50 % of the tension for a full opening of the valve 137. The hydraulic motor 88 and the spout 100 are rotated at half of their maximum speed.

When the pressure on the side of the push button 131 is increased at an instant t₂, the underlying outer contact point 132 will be energized and the microprocessor 135 gradually increases the output tension, until the full opening tension is reached at an instant t₃, one second after the instant t₂. The spout 100 is now rotated at its maximum speed.

When the rotating command is terminated at an instant t4 by a sudden release of the button 130, the output signal is gradually diminished until it attains the 50 % value at an instant t₅, a few tenths of a second after t₄. The tension then falls back to zero and the spout rotation is stopped.

The same response is generated when at the instant t₄ the rotating command is suspended by the microprocessor program, because the duct means 52 have reached their leftmost or rightmost position, where one of the cams 99 has actuated the sensor 98. All further commands for spout rotation in the same sense will be ignored, until the duct means 52 have been rotated in the opposite sense and the sensor 98 has been released by the cam 99.

Consequently, there is no immediate transition of the spout rotation speed from zero to maximum or vice versa. The corresponding high inertia forces of the spout 100 on the worm 87, and therefrom on the frame 1 of the harvester, are hereby avoided. These forces are dampened and there only remain the less important forces which occur during the transition from a standstill to a slow rotation and vice versa. The risk of deformation of harvester components by excessive inertia forces is diminished concurrently.

When the rotation command is suspended during a low speed rotation of the duct means 52, the program of the microprocessor 135 immediately stops the motor 88 and hence the duct means 52. This permits a precise adjustment of the material flow into the collecting vehicle.

The operator may pivot the deflector 115 at a high speed to direct the material flow into the collecting vehicle and at a low speed for choosing a particular deposit area inside the vehicle.

Alternatively, the positioning commands of the spout 100 and the deflector 115 may also be given by a single control handle of the joy-stick type, instead of the multifunctional push button 131.

Other embodiments of the discharge means of a forage harvester can be thought of without departing from the original idea of the invention. For example, the blower rotor may be constituted by a conventional ventilator with radially extending, rectangular paddle plates within a cylindric blower housing, which is positioned above the cutterhead 36.

A prior art harvester, in which the duct means 52 are still directly linked to the blower housing 48, will also benefit from the dampening effect of the rotation control system on the inertia forces of the spout 100. This effect becomes particularly advantageous when the opportunity is offered to rotate the duct means 52 at high speeds as described above.

## Claims

1. A forage harvester, comprising
- a main frame (1);
- a cutterhead assembly (34), comprising a cutterhead (36), operable to comminute crop material;
- blower means (48, 49), disposed to receive the comminuted crop material from said cutterhead assembly (34), and operable to propel said crop material to a blower outlet (73);
- duct means (52), comprising a lower member (84) in register with the blower outlet (73), and an upper member (100), mounted onto said lower member (84) and being operable to guide the flow of comminuted crop material along a curved path for discharging the crop material from the forage harvester,
- rotation means (86, 87) operable to rotate the upper duct member (100) and the lower duct member (84) with respect to the main frame (1); and
- a rotation control system (130, 134, 137, 88), operatively linked to said rotation means for controlling the rotation of said upper and lower duct members (84, 100),
**characterized in that** said rotation control system is operable to rotate said duct members (84, 100) at a variable rotational speed.

2. A forage harvester, according to claim 1, **characterized in that** the rotation control system (130, 134, 137, 88) comprises a single handle or push button (131) for the command of a low rotational speed and a high rotational speed, and said system being responsive to said high speed command for effecting a continuous increase of the rotation speed, until the high speed is reached.

3. A forage harvester, according to claim 2, **characterized in that** said system is responsive to the release of the high speed command for effecting a continuous decrease of the rotation speed, until the low speed is reached.

4. A forage harvester, according to any of the claims 1 to 3, **characterized in that** the rotation control system (130, 134, 137, 88) comprises a hydraulic actuator (88), operable to rotate the duct members (84, 100), an electrically controlled valve (137), operable to provide a variable fluid flow to said actuator (88), and an electric control device (134), operable to receive rotation commands and to generate a control signal to said valve (137).

5. A forage harvester, according to claim 4, **characterized in that** the electric control device (134) comprises a microprocessor (135), which is programmed to check the rotation command given by the operator and, when an occurrence or a cessation of a rotation command is detected, to generate a continuously increasing, respectively decreasing signal to said valve, until the maximum, respectively minimum signal, corresponding to the commanded speed, is reached.

6. A forage harvester, according to any of the preceding claims, **characterized in that** the discharge duct means (52) further comprise an adjustable deflector (115), which is pivotably attached to the rear portion of the upper duct member (100) and whereof the vertical movement is remotely controlled by a deflector adjustment system (130, 134, 124), which is operable to pivot the deflector (115) at a low and a high speed.

7. A forage harvester, according to claim 6, **characterized in that** both the low and high speed pivotment of the deflector (115) are commanded by the operator through a single handle or push button (131).

8. A forage harvester, according to claim 6 or 7, **characterized in that** the deflector adjustment system (130, 134, 124) comprises an electrical motor (124), operable to pivot the deflector (115), and an electrical control device (134), operable to receive pivotment commands and to energize said motor (124).

9. A forage harvester, according to claims 7 or 8, when appended to claim 2, **characterized in that** both the rotation and the pivotment are commanded by a single, multidirectional handle or push button (131).

10. A forage harvester, according to any of the preceding claims, **characterized in that** the duct means (52) are provided with rotation means (86, 87), operable to rotate the upper duct member (100) and the lower duct member (84) with respect to the main frame (1), said rotation means (86, 87) comprising a shear bolt assembly (89, 90, 91), having at least one shear bolt (91); the arrangement being such that, upon creation of an excessive external load on the upper duct member (100), said shear bolt (89, 90, 91) assembly is ruptured in order to permit free rotation of the duct members (84, 100).

11. A forage harvester, according to claim 10, **characterized in that**:
the rotation means (86, 87) comprise a section of a worm gear (86), which is attached coaxially to the rotational axis of the duct members (84, 100), and a worm (87) operably meshing therewith, which worm (87) is rotatably mounted in a support (89), which is secured relative to the main frame (1) by a pivot (90) and a shear bolt (91); and
the pivot (90) is positioned as to permit disengagement of the worm (87) from the worm gear (86) after rupture of the shear bolt (91).

## Patentansprüche

1. Feldhäcksler mit:
- einem Hauptrahmen (1);
- einer Messerkopf-Baugruppe (34) mit einem Messerkopf (36), der zur Zerkleinerung von Erntematerial betreibbar ist;
- Gebläseeinrichtungen (48, 49), die zum Empfang des zerkleinerten Erntematerials von der Messerkopf-Baugruppe (34) angeordnet und betreibbar sind, um das Erntematerial zu einem Gebläseauslaß (73) zu schleudern;
- Kanaleinrichtungen (52), die einen unteren Kanalteil (84) in Ausrichtung mit dem Gebläseauslaß (73) und einen oberen Kanalteil (100) umfassen, der auf dem unteren Kanalteil (84) befestigt und betreibbar ist, um die Strömung des zerkleinerten Erntematerials entlang einer gekrümmten Bahn zum Auswerfen des Erntematerials aus dem Feldhäcksler zu führen;
- Dreheinrichtungen (86, 87), die zur Drehung des oberen Kanalteils (100) und des unteren Kanalteils (84) gegenüber dem Hauptrahmen (1) betreibbar sind; und
- ein Dreh-Steuersystem (130, 134, 137, 88), das betriebsmäßig mit den Dreheinrichtungen verbunden ist, um die Drehung der oberen und unteren Kanalteile (84, 100) zu steuern,
**dadurch gekennzeichnet, daß** das Dreh-Steuersystem betreibbar ist, um die Kanalteile (84, 100) mit einer veränderbaren Drehgeschwindigkeit zu drehen.

2. Feldhäcksler nach Anspruch 1, **dadurch gekennzeichnet, daß** das Dreh-Steuersystem (130, 134, 137, 88) einen einzigen Handgriff oder Druckknopf (131) für die Befehlsgabe für eine niedrige Drehgeschwindigkeit und eine hohe Drehgeschwindigkeit umfaßt, wobei das System auf den Befehl für eine hohe Geschwindigkeit anspricht, um einen kontinuierlichen Anstieg der Drehgeschwindigkeit bis zum Erreichen der hohen Geschwindigkeit zu bewirken.

3. Feldhäcksler nach Anspruch 2, **dadurch gekennzeichnet, daß** das System auf die Beendigung des Befehls für eine hohe Geschwindigkeit anspricht, um eine kontinuierliche Verringerung der Drehgeschwindigkeit bis zum Erreichen der niedrigen Geschwindigkeit zu bewirken.

4. Feldhäcksler nach einem der Ansprüche 1-3, **dadurch gekennzeichnet, daß** das Dreh-Steuersystem (130, 134, 137, 88) ein Hydraulikstellglied (88), das zur Drehung der Kanalteile (84, 100) betreibbar ist, ein elektrisch gesteuertes Ventil (137), das zur Lieferung einer veränderbaren Strömungsmittelströmung an das Stellglied (88) betreibbar ist, und ein elektrisches Steuergerät (134) umfaßt, das zum Empfang von Drehbefehlen und zur Erzeugung eines Steuersignals an das Ventil (137) betreibbar ist.

5. Feldhäcksler nach Anspruch 4, **dadurch gekennzeichnet, daß** das elektrische Steuergerät (134) einen Mikroprozessor (135) umfaßt, der so programmiert ist, daß er den von dem Fahrer gegebenen Drehbefehl prüft und bei Feststellung eines Auftretens oder einer Beendigung des Drehbefehls ein kontinuierlich ansteigendes bzw. absinkendes Signal an das Ventil liefert, bis das maximale bzw. minimale Signal, das der befohlenen Geschwindigkeit entspricht, erreicht ist.

6. Feldhäcksler nach einem der vorhergehenden Ansprüche, **dadurch gekennzeichnet, daß** die Auswurfkanaleinrichtungen (52) weiterhin eine einstellbare Ablenkeinrichtung (115) umfassen, die schwenkbar an dem hinteren Abschnitt des oberen Kanalteils (100) befestigt ist und deren Vertikalbewegung durch ein Ablenkeinrichtungs-Einstellsystem (130, 134, 124) ferngesteuert wird, das zum Verschwenken der Ablenkeinrichtung (115) mit einer niedrigen und einer hohen Geschwindigkeit betreibbar ist.

7. Feldhäcksler nach Anspruch 6, **dadurch gekennzeichnet, daß** das Verschwenken der Ablenkeinrichtung (115) sowohl mit der niedrigen als auch der hohen Geschwindigkeit von dem Fahrer über einen einzigen Handgriff oder Druckknopf (131) befohlen wird.

8. Feldhäcksler nach Anspruch 6 oder 7, **dadurch gekennzeichnet, daß** das Ablenkeinrichtungs-Einstellsystem (130, 134, 124) einen Elektromotor, der zum Verschwenken der Ablenkeinrichtung (115) betreibbar ist, und ein elektrisches Steuergerät (134) umfaßt, das zum Empfang von Schwenkbefehlen und zur Steuerung des Motors (124) betreibbar ist.

9. Feldhäcksler nach Anspruch 7 oder 8 unter Rückbeziehung auf Anspruch 2, **dadurch gekennzeichnet, daß** sowohl die Drehung als auch das Verschwenken durch einen einzigen Mehrrichtungs-Handgriff oder Druckknopf (131) befohlen wird.

10. Feldhäcksler nach einem der vorhergehenden Ansprüche, **dadurch gekennzeichnet, daß** die Kanaleinrichtungen (52) mit Dreheinrichtungen (86, 87) versehen sind, die zur Drehung des oberen Kanalteils (100) und des unteren Kanalteils (84) gegenüber dem Hauptrahmen (1) betreibbar sind, daß die Dreheinrichtungen (86, 87) eine Scherbolzenbaugruppe (89, 90, 91) aufweisen, die zumindest einen Scherbolzen (91) aufweisen, wobei die Anordnung derart ist, daß bei Auftreten einer übermäßigen externen Last auf dem oberen Kanalteil (100) die Scherbolzenbaugruppe (89, 90, 91) abgeschert wird, um eine freie Drehung der Kanalteile (84,100) zu ermöglichen.

11. Feldhäcksler nach Anspruch 10, **dadurch gekennzeichnet, daß**:
die Dreheinrichtungen (86, 87) einen Abschnitt eines Schneckenzahnrades (86), das koaxial zur Drehachse der Kanalteile (84, 100) befestigt ist, und eine Schnecke (87) umfassen, die betriebsmäßig mit dem Schneckenzahnrad kämmt, wobei die Schnecke (87) drehbar in einer Halterung (89) gelagert ist, die gegenüber dem Hauptrahmen (1) durch einen Schwenkpunkt (90) und einen Scherbolzen (91) befestigt ist;
der Schwenkpunkt (90) so angeordnet ist daß eine Trennung der Schnecke (87) von dem Schneckenrad (86) nach einem Abscheren des Scherbolzens (91) ermöglicht wird.

## Revendications

1. Ensileuse comprenant:
- un châssis principal (1);
- un ensemble de tête de coupe (34), comprenant une tête de coupe (36), dont la fonction est de hacher du matériau de récolte ;
- un moyen de souffleuse (48, 49), ledit moyen de souffleuse étant disposé pour recevoir le matériau de récolte haché issu dudit ensemble de tête de coupe (34), et sa fonction est de projeter ledit matériau de récolte vers une sortie de souffleuse (73) ;
- un moyen de conduit (52), comprenant un organe inférieur (84) en coïncidence avec la sortie de souffleuse (73), et un organe supérieur (100), monté sur ledit organe inférieur (84) et destiné à guider le flux de matériau de récolte haché le long d'une trajectoire incurvée afin de décharger le moyen de récolte hors de l'ensileuse ;
- un moyen de rotation (86, 87) dont la fonction consiste à pivoter l'organe supérieur de conduit (100) et l'organe inférieur de conduit (84) par rapport au châssis principal (1) ; et
- un système de contrôle de rotation (130, 134, 137, 88) relié fonctionnellement audit moyen de rotation afin de contrôler la rotation desdits organes supérieur et inférieur de conduit (84, 100),
**caractérisée en ce que** la fonction dudit moyen de contrôle de rotation est de pivoter lesdits organes de conduit (84, 100) à une vitesse de rotation variable.

2. Ensileuse selon la revendication 1, **caractérisée en ce que** le système de contrôle de rotation (130, 134, 137, 88) comprend une poignée ou un bouton-poussoir (131) unique pour la commande d'une vitesse de rotation faible et d'une vitesse de rotation élevée, et ledit système réagissant à ladite commande de vitesse élevée afin de réaliser un accroissement continu de la vitesse de rotation jusqu'à ce que la vitesse élevée soit atteinte.

3. Ensileuse selon la revendication 2, **caractérisée en ce que** ledit système réagit à la commande de vitesse élevée afin de réaliser une diminution continue de la vitesse de rotation jusqu'à ce que la vitesse faible soit atteinte.

4. Ensileuse selon l'une quelconque des revendications 1 à 3, **caractérisée en ce que** le système de contrôle de rotation (130, 134, 137, 88) comprend un actionneur hydraulique (88) dont la fonction est de faire tourner les organes de conduit (84, 100), une soupape contrôlée électriquement (137) dont la fonction est de fournir un débit variable de fluide vers ledit actionneur (88), et un dispositif électrique de contrôle (134) dont la fonction est de recevoir des commandes de rotation et de générer un signal de contrôle vers ladite soupape (137).

5. Ensileuse selon la revendication 4, **caractérisée en ce que** le dispositif électrique de contrôle (134) comprend un microprocesseur (135) programmé pour vérifier la commande de rotation fournie par l'opérateur et, lors de la détection d'une apparition ou une interruption d'une commande de rotation, pour générer respectivement un signal croissant ou décroissant continûment vers ladite soupape, jusqu'à ce que le signal respectivement maximal ou minimal correspondant à la vitesse commandée soit atteint.

6. Ensileuse selon l'une quelconque des revendications précédentes, **caractérisée en ce que** le moyen de conduit de déchargement (52) comprend en outre un déflecteur réglable (115) fixé avec pivotement à la partie arrière de l'organe supérieur de conduit (100), et dont le mouvement vertical est commandé à distance par un système de réglage de déflecteur (130, 134, 124) dont la fonction est de faire pivoter le déflecteur (115) à une vitesse faible et une vitesse élevée.

7. Ensileuse selon la revendication 6, **caractérisée en ce que** le pivotement à vitesse tant faible qu'élevée du déflecteur (115) est commandé par l'opérateur à l'aide d'une poignée unique ou un bouton-poussoir unique (131).

8. Ensileuse selon la revendication 6 ou 7, **caractérisée en ce que** le système de réglage de déflecteur (130, 134, 124) comprend un moteur électrique (124) dont la fonction est de faire pivoter le déflecteur (115), et un dispositif électrique de contrôle dont la fonction est de recevoir des commandes de pivotement et d'activer ledit moteur (124).

9. Ensileuse selon la revendication 7 ou 8, lorsqu'elle se rapporte à la revendication 2, **caractérisée en ce que** tant la rotation que le pivotement sont commandés par une poignée ou un bouton-poussoir multidirectionnel(le) unique (131).

10. Ensileuse selon l'une quelconque des revendications précédentes, **caractérisée en ce que** le moyen de conduit (52) est pourvu d'un moyen de rotation (86, 87) dont la fonction est de pivoter l'organ supérieur de conduit (100) et l'organe inférieur de conduit (84) par rapport au châssis principal (1), ledit moyen de rotation (86, 87) comprenant un assemblage de boulon de cisaillement (89, 90, 91) possédant au moins un boulon de cisaillement (91); l'arrangement étant tel qu'à l'apparition d'une charge externe excessive sur l'organe supérieur de conduit (100), ledit assemblage de boulon de cisaillement (89, 90, 91) se rompt pour permettre une rotation libre des organes de conduit (84, 100).

11. Ensileuse selon la revendication 10, **caractérisée en ce que** le moyen de rotation (86, 87) comprend une section d'engrenage (86) à vis sans fin fixée coaxialement à l'axe de rotation des organes de conduit (84, 100), et une vis sans fin (87) s'y engrenant fonctionnellement, ladite vis sans fin (87) étant fixée par rapport au châssis principal (1) à l'aide d'un pivot (90) et d'un boulon de cisaillement (91) ; et
le pivot (90) est positionné de manière à permettre un dégagement de la vis sans fin (87) hors de l'engrenage à vis sans fin (86) après la rupture du boulon de cisaillement (91).
